(19) Europäisches Patentamt / European Patent Office / Office européen des brevets

(11) **EP 2 846 106 B1**

(12) **EUROPÄISCHE PATENTSCHRIFT**

(45) Veröffentlichungstag und Bekanntmachung des Hinweises auf die Patenterteilung:
**07.10.2020 Patentblatt 2020/41**

(51) Int Cl.:
**F24F 11/00** *(2018.01)* **F04D 27/00** *(2006.01)*
**F24F 12/00** *(2006.01)* **F24F 11/77** *(2018.01)*
**F24F 11/39** *(2018.01)*

(21) Anmeldenummer: **14181868.2**

(22) Anmeldetag: **21.08.2014**

(54) **Raumlüftungsvorrichtung Verfahren zur Luftstromregelung für eine Lüftungsvorrichtung**

Room ventilation device and method of controlling air flow wihin the ventilation device

Dispositif d'aération de pièce et méthode de réglage de débit d'air pour un dispositif d'aération de pièce

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2013 DE 102013217992**

(43) Veröffentlichungstag der Anmeldung:
**11.03.2015 Patentblatt 2015/11**

(73) Patentinhaber: **EBM-PAPST ST. GEORGEN GMBH & CO. KG**
**78112 St. Georgen (DE)**

(72) Erfinder:
• **Martin, Bernhard**
**82234 Wessling (DE)**
• **Dufner, Thomas**
**78136 Schonach (DE)**
• **Gutmann, Markus**
**79232 March (DE)**
• **Künstle, Manuel**
**77761 Schiltach (DE)**

(74) Vertreter: **Staeger & Sperling Partnerschaftsgesellschaft mbB**
**Sonnenstraße 19**
**80331 München (DE)**

(56) Entgegenhaltungen:
**EP-A1- 1 039 139 WO-A1-2007/062843**
**DE-A1- 10 141 125 DE-A1-102007 017 682**
**DE-A1-102011 002 734 DE-U1-202009 006 872**

**Beschreibung**

Die Erfindung betrifft eine Lüftungsvorrichtung zum Luftaustausch durch eine Gebäudehülle und ein Verfahren zur Luftstromregelung für eine Lüftungsvorrichtung zum Luftaustausch durch eine Gebäudehülle.

Die EP 1 039 139 A1 zeigt ein Gebläse mit einem Radiallüfter, der durch einen Elektromotor mit einer Drehzahl n angetrieben ist. Das Gebläserad hat mehrere Schaufeln. Das Gebläse soll eine vorgegebene, "künstliche" Gegendruck/Volumenstrom-Kennlinie, die auch als Luftleistungskennlinie bezeichnet wird, erreichen. Dabei soll eine direkte Messung vom Gegendruck und vom Volumenstrom vermieden werden, und eine beliebige künstliche Kennlinie kann durch Regelung der Drehzahl auf eine berechnete Solldrehzahl erfolgen. Die Solldrehzahl wird in Abhängigkeit von elektrischen Stromgrößen und der Istdrehzahl auf Basis einer vorgegebenen künstlichen Sollbetriebsdruck/Sollvolumenstrom-Kennlinie erzeugt.

Eine Lüftungsvorrichtung zum Einbau in eine Gebäudehülle, die dazu ausgebildet ist, Luftaustauschströme durch die Gebäudehülle zu fördern, ist beispielsweise aus der DE 10 2011 002 734 A1 bekannt. Sie umfasst einen Wärmetauscher, welcher eine Wärmeübertragung zwischen den in das Gebäude hinein strömenden und aus dem Gebäude hinaus strömenden Luftströmen bewirkt.

Durch bessere Gebäudeisolierung und effizientere Heizanlagen gelingt es, den Energiebedarf für die Gebäudeheizung mehr und mehr zu senken. Aus verschiedenen Gründen ist jedoch ein Mindestluftaustausch zwischen Gebäudeinnerem und Gebäudeäußerem durch die thermische Gebäudehülle zwingend erforderlich. Die Wärmeverluste bei einer solchen Lüftung werden deshalb mehr und mehr zu einer besonders störenden Größe. Man setzt deshalb Lüftungsvorrichtungen der eingangs genannten Art ein, um lüftungsbedingte Wärmeverluste zu reduzieren. Aus Effizienzgründen sind dabei rekuperative Lüftungsvorrichtungen zu bevorzugen, welche die sensible Wärme des Innenraums im Winter rückgewinnen bzw. es im Sommer erlauben, den Innenraum zu kühlen.

Um den Wirkungsgrad hoch zu halten, muss auf die Luftführung besonders geachtet werden. Hierbei sind vier Luftströme zu unterscheiden, die in ihrer Bezeichnung auf den Innenraum bezogen sind. Der Abluftstrom wird aus dem Innenraum abgezogen und tritt an der Lüftungsvorrichtung nach Wärmerückgewinnung als Fortluftstrom aus. In den Innenraum gibt die Lüftungsvorrichtung den Zuluftstrom ab, welcher als Außenluftstrom am Gebäudeäußeren angesaugt wird.

Dezentral arbeitende, sogenannte Komfort-Lüftungsvorrichtungen erfreuen sich großer Beliebtheit. Sie können aufwandsgering installiert werden. In der Regel steht der Lärmschutz im Vordergrund, da solche Geräte in aller Regel vom Innenraum aus sichtbar sind. Für die Geräuschentwicklung einer Lüftungsvorrichtung sind die Luftfördervorrichtungen von besonderer Bedeutung. Andererseits sind Randbedingungen für die zu fördernden Luftmengen zu beachten, insbesondere was Feuchte und $CO_2$-Gehalt im Innenraum angeht.

Eine grundsätzliche Anforderung an dezentrale Lüftungsanlagen besteht darin, dass sie möglichst ohne Wartungsaufwand betrieben werden können. Die Lüftungsvorrichtung sollte so ausgestaltet sein, dass sie ohne weitere Mitwirkung des Endverbrauchers einen möglichst optimalen Betrieb realisiert. Auch hier hat sich die Einstellung der Luftfördereinrichtung als sehr vorteilhafter Aspekt herausgestellt.

Man ist bestrebt, dezentrale Anlagen möglichst so einzubauen, dass sie im Innenraum wenig stören. Sie sollten möglichst bündig in die thermische Gebäudehülle eingegliedert werden können und dort insbesondere zum Innenraum hin keine störenden Vorsprünge etc. aufweisen. Um die deswegen geforderte kompakte Bauweise zu erreichen, wie auch um möglichst effizienten und geräuscharmen Betrieb zu realisieren, schlägt die eingangs genannte Patentschrift die Verwendung von Radiallüftern vor, wie sie beispielsweise hinsichtlich ihres Aufbaus in der DE 20 2009 006 872 U1 beschrieben sind. Diese Radiallüfter werden üblicherweise von elektronisch kommutierten Motoren, insbesondere Außen- oder Innenläufermotoren angetrieben. Die DE 101 41 125 A1 beschreibt ein Steuerungskonzept für solche Motoren. Es nutzt den Vorteil, dass bei Radiallüftern mit vorwärtsgekrümmten Schaufeln eine bekannte bzw. vorgegebene, gerätetypabhängige Beziehung zwischen gefördertem Volumenstrom und elektrischem Strom durch den Antriebsmotor besteht. Die DE 10 2007 017 682 A1 bildet die Steuerung weiter, indem der Volumenstrom und die Drehzahl gemessen und als Basis für eine Regelung verwendet werden.

Genaue Untersuchungen ergaben jedoch, dass trotz dieser im Stand der Technik erwähnten Beziehung zwischen gefördertem Luftvolumenstrom und elektrischem Betriebsstrom des Radiallüfters beim Einsatz in dezentralen Lüftungsvorrichtungen Abweichungen festgestellt wurden, die zu einer unerwünschten Abweichung vom gewünschten Volumenstrom führen.

Der Erfindung liegt deshalb die Aufgabe zugrunde, eine Lüftungsvorrichtung und eine Luftstromregelung für eine Lüftungsvorrichtung anzugeben, die beim Einsatz von Radiallüftern eine bessere Einstellgenauigkeit eines Luftvolumenstroms erreichen und damit einen möglichst volumenkonstanten Betrieb der Lüftungsvorrichtung erlauben, und die bevorzugt ohne eine Messung des Volumenstroms auskommen.

Diese Aufgabe wird bevorzugt gelöst durch eine Lüftungsvorrichtung zum Luftaustausch durch eine Gebäudehülle, wobei die Lüftungsvorrichtung aufweist: mindestens einen elektrischen Radiallüfter mit vorwärtsgekrümmten Schaufeln zur Förderung eines Luftstroms, eine Betriebssteuereinrichtung zum Steuern eines Betriebs der Lüftungsvorrichtung, die einen Sollwert für den Luftstrom vorgibt, eine Luftmesseinrichtung, welche dazu ausgebildet ist, für einen Dichteparameter einen Messwert von Luft, welche der Radiallüfter fördert (z. B. ansaugt), bereitzustellen, und mindestens eine Lüfterregeleinrichtung, welche den Betrieb des Radiallüfters hinsichtlich eines elektrischen Betriebsstroms des Radiallüfters oder einer Drehzahl des Radiallüfters regelt und bevorzugt die jeweils andere Größe erfasst, mehrere, verschiedene Zusammenhänge von Drehzahl und elektrischem Betriebsstrom verwendet, wobei jeder der Zusammenhänge einem anderen Sollwert des Luftstroms zugeordnet ist und vom Dichteparameter der vom Radiallüfter geförderten Luft abhängt, aus dem Sollwert für den Luftstrom und dem Messwert des Dichteparameters der geförderten Luft einen der Zusammenhänge auswählt und den elektrischen Betriebsstrom oder die Drehzahl des Radiallüfters auf einen Wert einstellt, bei dem die Drehzahl und der elektrische Betriebsstrom des Radiallüfters dem ausgewählten der Zusammenhänge genügt.

Die Aufgabe wird weiter bevorzugt gelöst durch ein Verfahren zur Luftstromregelung für eine Lüftungsvorrichtung zum Luftaustausch durch eine Gebäudehülle, wobei mit mindestens einem elektrischen Radiallüfter mit vorwärtsgekrümmten Schaufeln ein Luftstrom gefördert wird, ein Sollwert für einen Luftstrom vorgegeben wird, und für einen Dichteparameter ein Messwert von Luft bereitgestellt wird, welche der Radiallüfter fördert, ein Betrieb des Radiallüfters hinsichtlich eines elektrischen Betriebsstroms des Radiallüfters oder einer Drehzahl des Radiallüfters geregelt wird, wobei mehrere, verschiedene Zusammenhänge von Drehzahl und elektrischem Betriebsstrom des Radiallüfters verwendet werden, wobei jeder der Zusammenhänge einem anderen Sollwert des Luftstroms zugeordnet ist und vom Dichteparameter der vom Radiallüfter geförderten Luft abhängt, ausgehend von dem Sollwert für den Luftstrom und dem Messwert des Dichteparameters der geförderten Luft einer der Zusammenhänge ausgewählt wird und der elektrischen Betriebsstrom oder die Drehzahl des Radiallüfters auf einen Wert eingestellt wird, bei dem die Drehzahl und der elektrische Betriebsstrom des Radiallüfters dem ausgewählten der Zusammenhänge genügt.

Gleichermaßen ist bevorzugt ein elektrischer Radiallüfter mit vorwärtsgekrümmten Schaufeln zur Förderung eines Luftstroms (oder allgemein eines Stroms eines gasförmigen Fluids) vorgesehen, der eine Lüfterleiteinrichtung aufweist, welche einen Betrieb des Radiallüfters hinsichtlich eines elektrischen Betriebsstroms und einer Drehzahl leitet, wobei zusätzlich eine Luftmesseinrichtung vorgesehen ist, welche dazu ausgebildet ist, für einen Dichteparameter einen Messwert von Luft bereitzustellen, welche der Radiallüfter fördert, und wobei weiter die Lüfterleiteinrichtung mehrere, verschiedene Zusammenhänge von Drehzahl und elektrischem Betriebsstrom des Radiallüfters verwendet, wobei jeder der Zusammenhänge einem anderen Sollwert des Luftstroms zugeordnet ist und vom gemessenen Dichteparameter der vom Radiallüfter geförderten Luft abhängt, wobei die Lüfterleiteinrichtung aus einem vorgegebenen Sollwert für den Luftstrom und dem Messwert des Dichteparameters der geförderten Luft einen der Zusammenhänge auswählt und den elektrischen Betriebsstrom oder die Drehzahl des Radiallüfters auf einen Wert einstellt, bei dem Betriebsstrom und Drehzahl dem ausgewählten Zusammenhang genügen.

Ebenfalls ist bevorzugt ein Verfahren zur Luftstromregelung für einen elektrischen Radiallüfter mit vorwärtsgekrümmten Schaufeln vorgesehen, mit dem ein Luftstrom (oder ein Strom eines anderen gasförmigen Fluids) zu fördern ist, wobei ein Betrieb des Radiallüfters hinsichtlich eines elektrischen Betriebsstroms und einer Drehzahl des Radiallüfters geleitet wird, für einen Dichteparameter ein Messwert von Luft bereitgestellt wird, welche der Radiallüfter fördert, und wobei mehrere, verschiedene Zusammenhänge von Drehzahl und elektrischem Betriebsstrom des Radiallüfters verwendet werden, wobei jeder der Zusammenhänge einem anderen Sollwert des Luftstroms zugeordnet ist und vom gemessenen Dichteparameter der vom Radiallüfter angesaugten Luft abhängt, ausgehend von einem vorgegebenen Sollwert des Luftstroms und dem Messwert des Dichteparameters einer der Zusammenhänge ausgewählt wird und der elektrische Betriebsstrom oder die Drehzahl des Radiallüfters auf einen Wert eingestellt wird, bei dem die Drehzahl und der elektrische Betriebsstrom dem ausgewählten der Zusammenhänge genügt.

Die Erfindung geht von der Erkenntnis aus, dass bei einem Radiallüfter die Berücksichtigung der Dichte der geförderten Luft zu einer höheren Konstanz der Luftmenge führt. Es werden deshalb Zusammenhänge verwendet, die auch von dem Dichteparameter abhängen. Jeder Zusammenhang stellt im mathematischen Sinne eine Funktion der Drehzahl vom Betriebsstrom dar. Ein weiterer Einflussparameter ist der Differenzdruck, den der Radiallüfter beim Fördern des Luftstroms überwinden muss. Es gibt deshalb für einen Sollluftstrom nicht ein einziges Paar aus Drehzahl und Betriebsstrom, sondern je nach Druckdifferenz stellt sich ein anderes Wertepaar des Zusammenhangs zwischen Betriebsdruck und Drehzahl ein. Beim Start des Radiallüfters weiß man a priori nicht, welche Druckdifferenz vorliegt. Gibt man nun einen Wert für den Betriebsstrom oder die Drehzahl vor, stellt sich ein Betriebsstrom bzw. eine Drehzahl ein, die in der Regel nicht dem Zusammenhang genügt. Mit anderen Worten, bei Vorgabe einer Drehzahl oder eines Betriebsstroms wird nur dann der gewünschte Sollwert des Luftstroms gefördert, wenn exakt die zum aktuellen Differenzdruck gehörende Drehzahl bzw. der zum aktuellen Differenzdruck gehörende Betriebsstrom vorgegeben wird. Dann nämlich stellt sich der jeweils andere Wert genau gemäß des Zusammenhangs ein. Da man beim Start des Radiallüfters den Differenzdruck nicht kennt, ist es Ziel der Regelung, die richtige Drehzahl bzw. den richtigen Betriebsstrom zu finden, der dem Zusammenhang genügt.

Nachfolgend geht die Beschreibung in einigen Ausführungsbeispielen sowie allgemeinen Erläuterungen von der Vorgabe des Betriebsstroms aus. Dies ist natürlich nicht einschränkend aufzufassen. Vielmehr kann auch der jeweilige andere Wert des Zusammenhangs vorgegeben werden, d. h. die Drehzahl.

Der Zusammenhang ist bevorzugt vom Dichteparameter abhängig. Diese Abhängigkeit kann dadurch verwendet werden, dass für verschiedene Werte des Dichteparameters jeweils ein Zusammenhang vorgehalten wird. Alternativ ist es möglich, einen Grundzusammenhang, der beispielsweise für einen Standardwert des Dichteparameters ermittelt wurde, zu verwenden und diesen nachfolgend mit einem Korrekturfaktor zu korrigieren, der aus einer Abweichung des Dichteparameters vom Standardwert gewonnen wurde. Insbesondere ist es möglich, nach einem Zusammenhang einen der beiden Werte mit dem Korrekturfaktor zu korrigieren, beispielsweise multiplikativ zu dehnen oder zu strecken.

Üblicherweise und insbesondere im Fall von Lüftungsvorrichtungen ist die Druckdifferenz nicht bekannt. Die Erfindung verfolgt deshalb bevorzugt den Ansatz, die Drehzahl/den Betriebsstrom so einzustellen, dass sich ein Betriebsstrom/eine Drehzahl ergibt, die dem Zusammenhang, der für die gewünschte Lüftfördermenge besteht, genügt. Mit anderen Worten ausgedrückt wird für die gewünschte, zu fördernde Luftmenge der passende Zusammenhang ausgewählt, und man stellt diejenige Drehzahl/denjenigen Betriebsstrom ein, bei der/bei dem sich ein Betriebsstrom bzw. eine entsprechende Drehzahl einstellt, die dem Zusammenhang entsprechen. Auf diese Weise hat man sichergestellt, dass für den aktuell vorhandenen, jedoch hinsichtlich seiner Größe unbekannten Differenzdruck genau die gewünschte Luftmenge gefördert wird.

Der Zusammenhang kann auf verschiedene Weise hinterlegt sein. In einer Ausführungsform liegt er als Tabelle vor, die Wertepaare aus Drehzahl und Betriebsstrom enthält. Jede Tabelle gilt bevorzugt für eine gewünschte, zu fördernde Luftmenge. Jedes Wertepaar des Zusammenhangs gilt für eine bestimmte Druckdifferenz. Es ist damit im Betrieb denkbar, dass eine Druckdifferenz vorliegt, die nicht exakt der eines Wertepaars entspricht. Man findet damit keinen Betriebsstrom, bei dem eine Drehzahl gemäß Tabelle vorliegt. In einem solchen Fall ist entweder die Erreichung der Drehzahl eines Wertepaares innerhalb gewisser Fehlergrenzen ausreichend, oder eine Interpolation zwischen Wertepaaren wird ausgeführt. Diese Varianten seien ebenfalls unter der Formulierung, dass die Drehzahl für den eingestellten Betriebsstrom "dem Zusammenhang genügt", subsumiert. Eine alternative Ausführungsform verwendet keine Tabelle, sondern einen funktionalen (funktionellen) Zusammenhang, also die Beschreibung durch eine Gleichung.

Die Erfinder erkannten, dass bei der Anwendung von Radiallüftern in Lüftungsvorrichtungen Umstände vorliegen, welche zu Abweichungen hinsichtlich der geförderten Luftmenge führen.

1. Der Stand der Technik weist bereits darauf hin, dass zwischen Betriebsstrom des ECMangetriebenen Radiallüfters mit vorwärtsgekrümmten Schaufeln und der Drehzahl ein bekannter Zusammenhang besteht, der zur Regelung ausgenutzt werden kann. Dieser bekannte Zusammenhang erlaubt jedoch bei hochgenauen Anwendungen keine hinreichende Volumenkonstanz. Die bevorzugte Ausgestaltung erlaubt es nun, ein gute Volumenkonstanz zu erreichen. Berücksichtigt man zugleich die Dichte der geförderten Luft abstromseitig (oder alternativ und zusätzlich zustromseitig) kann die Volumenkonstanz auch als Massenkonstanz ausgestaltet werden. Dies ist bei technischen Anwendungen von Radiallüftern von Vorteil, wenn die Kühlung durch den geförderten Luftstrom im Vordergrund steht. Die durch einen Luftstrom abgeführte Wärmemenge hängt von der Luftmasse ab. Bei Lüftungsvorrichtungen für Büro- oder Wohngebäude spielt jedoch die auf den Menschen bezogene Lüftungsgröße in Form eines Volumenstroms eine größere Rolle.

2. Bei der Lüftungsvorrichtung muss sehr genau darauf geachtet werden, dass der Volumenstrom der Zuluft möglichst präzise dem Volumenstrom der Abluft entspricht. Bei Gebäuden, die von Menschen betreten werden, also z.B. bei Wohn- oder Bürogebäuden, sind größere Abweichungen zwischen den beiden Volumenströmen ungewünscht oder sogar unzulässig. Die Erfindung erlaubt bevorzugt eine hochpräzise Balance der Volumenströme.

3. Lüftungsvorrichtungen werden üblicherweise mit Filtern versehen. Diese Filter haben über die Lebensdauer keinen konstanten Strömungswiderstand, da der Strömungswiderstand mit der Filterbeladung steigt. Ein Radiallüfter in einer Lüftungsvorrichtung hat somit einen nichtkonstanten Differenzdruck, in Abhängigkeit von der Filterbeladung. Die Erfindung erlaubt es bevorzugt, unabhängig vom Differenzdruck, d. h. unabhängig von der Filterbeladung einen Volumenstrom hochpräzise einzustellen. Gleichzeitig kann aus dem aktuell eingestellten Wertepaar von Drehzahl und elektrischem Betriebsstrom der Differenzdruck und damit eine Aussage über die Filterbeladung ermittelt werden. All diese Vorteile werden erreicht, ohne dass eine Volumenmessung erforderlich wäre.

4. In einer Lüftungsvorrichtung ist ein Radiallüfter, der die Abluft fördert, anderen fluidischen Bedingungen ausgesetzt, als ein Radiallüfter, der die Zuluft fördert. Sind beim Zuluftradiallüfter die Ansaugbedingungen abgesehen von Filtereinflüssen in der Lüftungsvorrichtung bekannt, kann beim Abluftradiallüfter je nach Einbausituation der Ansaugkanal stark variieren. Dies ist insbesondere dann der Fall, wenn an die Lüftungsvorrichtung optional Leitungen zu einem Nebenraum (z. B. einem Bad etc.) angeschlossen werden können. Die Steuerungswerte für den Abluftradiallüfter und den Zuluftradiallüfter müssen somit in der Regel unterschiedlich sein, wobei bei Entwicklung einer Lüftungsvorrichtung die Unterschiede nicht bekannt sind, weil sie letztlich von der aktuellen Einbausituation abhängen, auf welche der Hersteller nur begrenzten Einfluss hat. Das selbsttätige Auffinden eines Wertepaars aus Drehzahl und elektrischem Betriebsstrom macht Einmessarbeiten vor Ort, welche den von der aktuellen Einbausituation abhängigen Differenzdruck ermitteln könnten, unnötig.

5. Lüftungsvorrichtungen mit einem Wärmetauscher führen die Abluft durch den Wärmetauscher und erwärmen damit die Zuluft, welche ebenfalls durch den Wärmetauscher strömt und dort erwärmt wird. Eine solche Erwärmung kann in Sommerzeiten unerwünscht sein. Lüftungsvorrichtungen sehen deshalb üblicherweise einen Überbrückungskanal vor, durch den die Zuluft geführt werden kann, um den Wärmetauscher zu umgehen. Verständlicherweise sind die Strömungsverhältnisse dann für die Zuluft nicht konstant, je nachdem, ob die Luft durch den Wärmetauscher oder den Überbrückungskanal fließt. Die bevorzugte Regelung reagiert auch auf solche, sich verändernden Strömungsverhältnisse automatisch.

6. Lüftungsvorrichtungen werden bei verschiedenen Temperaturen und in verschiedenen Höhenlagen eingesetzt. Dies führt dazu, dass selbst bei einer konstanten Luftmassenförderung die Volumenströme stark variieren würden, je nach Anwendungssituation. Für eine Auslegung, bei der bestimmte Volumenströme der Luft genau einzuhalten sind, sind solche nachteilig. So kann beispielsweise unerwünscht ein zu hoher Volumenstrom gefördert werden, was zu einer Geräuschbelästigung durch die Lüftungsvorrichtung führt.

Die oben genannten sechs Punkte erreichten die Erfinder, indem sie eine genauere Steuerung des Radiallüfters in der Lüftungsvorrichtung überraschend erreichen, wenn die genannten Zusammenhänge hinsichtlich eines die Dichte der geförderten Luft beschreibenden Parameters korrigiert werden. Als solcher Parameter kommen beispielsweise der Luftdruck der angesaugten Luft, die Temperatur der angesaugten Luft und/oder die relative Feuchte der angesaugten Luft in Frage. Jeder dieser Parameter beeinflusst die Dichte der Luft und ist damit für die Volumenkonstanz der Luftförderung relevant. Es ist deshalb vorgesehen, die angesaugte Luft hinsichtlich mindestens eines der genannten Dichteparameter zu messen und beim verwendeten Zusammenhang den entsprechenden Messwert zu berücksichtigen. Die Bereitstellung eines Messwertes für den Dichteparameter kann auch dadurch erfolgen, dass ein die Luftdichte beeinflussender Grundwert bereitgestellt wird. Im Falle des Luftdrucks kann dies beispielsweise die Höhe über Normalnull sein. Die Verwendung dieses Wertes erspart Messfühler, da beim Einbau des Gerätes lediglich die geographische Höhe über dem Meeresspiegel der Steuerung mitgeteilt werden muss.

Die Berücksichtigung des Dichteparameters im Zusammenhang kann auf verschiedene Art und Weise erfolgen. In einer einfachen Ausführungsform wird ein Basiszusammenhang verwendet und mit einem Korrekturwert korrigiert, der aus dem Messwert des Dichteparameters (oder den Messwerten mehrerer Dichteparameter) abgeleitet wird. In einer anderen Ausführungsform können für einen Zusammenhang verschiedene Modifikationen vorgehalten werden, sodass eine Schar von Zusammenhängen besteht, wobei der gemessene Dichteparameter der Scharparameter ist. Diese genannten Ausführungsformen kommen sowohl bei einem in Form von Tabellen vorgehaltenen Zusammenhang als auch bei einem funktionalen Zusammenhang in Frage. Bei einem funktionalen Zusammenhang ist darüber hinaus eine mögliche Ausführungsform, dass der Dichteparameter Bestandteil der Funktion ist.

Durch die Berücksichtigung des Dichteparameters im Zusammenhang zwischen Drehzahl und Betriebsstrom des Radiallüfters wird eine besonders hohe Volumenkonstanz auch unter verschiedenen Betriebszuständen erreicht. Auch wenn vorstehend die Einflüsse an einer dezentralen Raumlüftungsvorrichtung analysiert wurden, wird die Volumenkonstanz natürlich gleichermaßen erreicht, wenn der Radiallüfter anderweitig eingesetzt wird. Daher betrifft die Erfindung, wie oben dargelegt, bevorzugt auch einen Radiallüfter sowie ein entsprechendes Verfahren zur Regelung eines Radiallüfters.

Die Anwendung in einer Lüftungsvorrichtung ist bei der bevorzugten Steuerung eines Radiallüfters vorteilhaft. Besonders vorteilhaft ist es natürlich, zwei Radiallüfter zu verwenden, einen für die Zuluft und einen für die Abluft. Es ist deshalb eine Ausführungsform vorteilhaft, bei der vom elektrische Radiallüfter geförderte Luftstrom ein Abluftstrom ist, die Lüftungsvorrichtung einen weiteren elektrischen Radiallüfter mit vorwärtsgekrümmten Schaufeln aufweist, der zur Förderung eines weiteren Luftstromes ausgebildet ist, welcher ein dem Abluftstrom gegenläufiger Zuluftstrom ist, die Lüfterregeleinrichtung einen Betrieb des weiteren Radiallüfters hinsichtlich eines elektrischen Betriebsstroms des weiteren Radiallüfters oder einer Drehzahl des weiteren Radiallüfters regelt, die Luftmesseinrichtung dazu ausgebildet ist, für den Dichteparameter auch einen Messwert von Luft bereitzustellen, welche der weitere Radiallüfter ansaugt, und die Lüfterregeleinrichtung den Betrieb des weiteren Radiallüfters hinsichtlich eines elektrischen Betriebsstroms des weiteren Radiallüfters oder einer Drehzahl des weiteren Radiallüfters regelt, mehrere, verschiedene Zusammenhänge von Drehzahl und elektrischem Betriebsstrom verwendet, wobei jeder der Zusammenhänge einem anderen Sollwert des Luftstroms zugeordnet ist und vom Dichteparameter der vom weiteren Radiallüfter angesaugten Luft abhängt, ausgehend von dem Sollwert für den Luftstrom und dem Messwert des Dichteparameters der angesaugten Luft einen der Zusammenhänge auswählt und den elektrischen Betriebsstrom oder die Drehzahl des weiteren Radiallüfters auf einen Wert einstellt, bei dem der elektrische Betriebsstrom und die Drehzahl des weiteren Radiallüfters dem ausgewählten der Zusammenhänge genügt.

Gleichermaßen ist eine Ausführungsform des Verfahrens vorteilhaft, bei der der vom elektrische Radiallüfter geförderte Luftstrom ein Abluftstrom ist, mit einem weiteren elektrischer Radiallüfter mit vorwärtsgekrümmten Schaufeln ein weiterer Luftstrom gefördert wird, welcher ein dem Abluftstrom gegenläufiger Zuluftstrom ist, für den Dichteparameter ein Messwert von Luft bereitgestellt wird, welche der weitere Radiallüfter ansaugt, und ein Betrieb des weiteren Radiallüfters hinsichtlich eines elektrischen Betriebsstroms des weiteren Radiallüfters oder einer Drehzahl des weiteren Radiallüfters geregelt wird, wobei mehrere, verschiedene Zusammenhänge von Drehzahl und elektrischem Betriebsstrom des weiteren Radiallüfters verwendet werden, wobei jeder der Zusammenhänge einem anderen Sollwert des Luftstroms zugeordnet ist und vom Dichteparameter der vom weiteren Radiallüfter angesaugten Luft abhängt, ausgehend von dem Sollwert für den Luftstrom und dem Messwert des Dichteparameters der angesaugten Luft einer der Zusammenhänge ausgewählt wird, und der elektrische Betriebsstrom oder die Drehzahl des weiteren Radiallüfters auf einen Wert eingestellt wird, bei dem der elektrische Betriebsstrom und die Drehzahl des weiteren Radiallüfters dem ausgewählten der Zusammenhänge genügt.

Für die beiden Radiallüfter werden in einer Weiterbildung Zusammenhänge verwendet, die aufgrund der unterschiedlichen Einbausituation der Radiallüfter verschieden sind. Die unterschiedliche Einbausituation kann in einer Ausführungsform dadurch begründet sein, dass beide Radiallüfter an der Innenseite der thermischen Gebäudehülle angeordnet sind. Damit haben sie unterschiedliche fluidische Situationen hinsichtlich Länge des Ausblaskanals und des Ansaugkanals. Diese Unterschiede können durch die verschiedenen Zusammenhänge sehr gut ausgeglichen werden.

Bei einer Ausführungsform einer Lüftungsvorrichtung mit zwei Radiallüftern, einem für die Abluft und einem für die Zuluft, ist es vorteilhaft, wenn das Betriebssteuergerät einen Luftaustauschstrom vorgibt. Dies kann beispielsweise der Zuluftstrom sein. Der Abluftstrom ist dann möglichst präzise auf den gleichen Wert einzustellen. Die Zusammenhänge für Abluftradiallüfter und Zuluftradiallüfter werden somit auf Basis eines Luftaustauschstroms ausgewählt, der entweder der Zuluftstrom oder der Abluftstrom sein kann.

Bei der Lüftungsvorrichtung werden, wie bereits eingangs erwähnt, üblicherweise Filter eingesetzt. Es ist deshalb eine Ausführungsform bevorzugt, bei der aus dem eingestellten Wert des Betriebsstroms oder der gemessenen Drehzahl ein Beladungsgrad des jeweiligen Filters ermittelt wird. Dieser Beladungsgrad wird dann über eine Filterstandanzeige angezeigt oder über eine Filterstandschnittstelle ausgegeben. Der besondere Vorteil liegt hier darin, dass nicht nur erkannt werden kann, ob ein Filter verstopft ist, wie dies im Stand der Technik bislang anhand der Überwachung auf einen maximalen Betriebsstromwert geschah. In Betrieb kann jederzeit eine Aussage darüber getroffen werden, welchen Zustand der Filter gerade hat. Diese kann daraus abgeleitet werden, welches Wertepaar eines Zusammenhangs Basis für den Betrieb des Radiallüfters bildet. Je höher Drehzahl oder Betriebsstrom für einen gegebenen Volumenstrom ist, desto stärker ist der Filter beladen.

Eine besonders bevorzugte Ausführungsform nutzt eine einfache Ermittlung des Wertes, bei dem Drehzahl und Betriebsstrom dem ausgewählten der Zusammenhänge genügen, beginnend von einem Startwert. Zuerst wird ein Startwert eines der beiden Werte, beispielsweise des elektrischen Betriebsstroms oder der Drehzahl, vorgegeben. In der Regel wird bei diesem Startwert der jeweils andere Wert noch nicht dem Zusammenhang genügen. Dann wird ausgehend von diesem Startwert der vorgegebene Wert erhöht, um den anderen Wert zu finden, der dem Zusammenhang genügt. Für einen geräuscharmen Betrieb kann man beispielsweise die Mindestdrehzahl des Radiallüfters vorgeben. Liegt nicht der minimale Differenzdruck vor, wird der sich einstellende Betriebsstrom geringer sein als der ausgewählte Zusammenhang vorschreibt. Es würde zu wenig Luftvolumen gefördert. Nun erhöht die Lüftungssteuereinrichtung die Drehzahl so lange, bis der sich einstellende Betriebsstrom dem Zusammenhang genügt. Dies kann kontinuierlich, quasi-kontinuierlich oder iterativ erfolgen. Auf diese Weise wird das Wertepaar aus Drehzahl und Betriebsstrom gefunden, das für den aktuellen, jedoch nicht bekannten Differenzdruck zutreffend ist. Aus diesem Wertepaar kann dann auch, wie bereits erwähnt, der Differenzdruck und damit beispielsweise ein Wert für eine Filterbeladung etc. abgeleitet werden.

Soweit vorstehend oder nachfolgend Aspekte der Lüftungsvorrichtung oder insbesondere funktionelle Merkmale der Lüfterregeleinrichtung beschrieben sind, gilt diese Beschreibung gleichermaßen für das entsprechende Verfahren zur Regelung. Umgekehrt gelten natürlich Merkmale, die für das Verfahren erwähnt sind, auch für die entsprechende Vorrichtung, d. h. die Lüftungsvorrichtung oder den elektrischen Radiallüfter.

Soweit in dieser Beschreibung von einer Betriebssteuereinrichtung oder Steuerung oder Regelung des Betriebes die Rede ist, ist damit im technisch normativen Sinne eine Leiteinrichtung gemeint, die sowohl Steuerungsfunktionen, also die Vorgabe eines Wertes oder rückkoppelnde Regelung, als auch Regelungsfunktionen übernehmen kann. Der Begriff "Steuerung" wird in dieser Beschreibung nicht ausschließlich darauf beschränkt verwendet, dass damit eine Rückkopplung im Sinne einer Regelung ausgeschlossen sei. Vielmehr wird der Begriff "Steuerung" als Oberbegriff für eine rückkoppelnde und eine nicht-rückkoppelnde Steuerung verwendet.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen, sowie aus den Unteransprüchen. Es zeigen:

Fig. 1            eine Schemadarstellung einer Lüftungsvorrichtung für ein Wohn- oder Bürogebäude,
Fig. 2            eine schematische Darstellung des Typs eines Radiallüfters, der in der Lüftungsvorrichtung der Fig. 1 zum Einsatz kommt,
Fig. 3 und 4      Drehzahl-Betriebsstromdiagramme, die bei der Steuerung des Radiallüfters der Fig. 2 eingesetzt werden,
Fig. 5            ein dreidimensionaler Zusammenhang zwischen Drehzahl, Betriebsstrom und Druckdifferenz, der den Diagrammen der Fig. 3 und Fig. 4 zugrunde liegt.

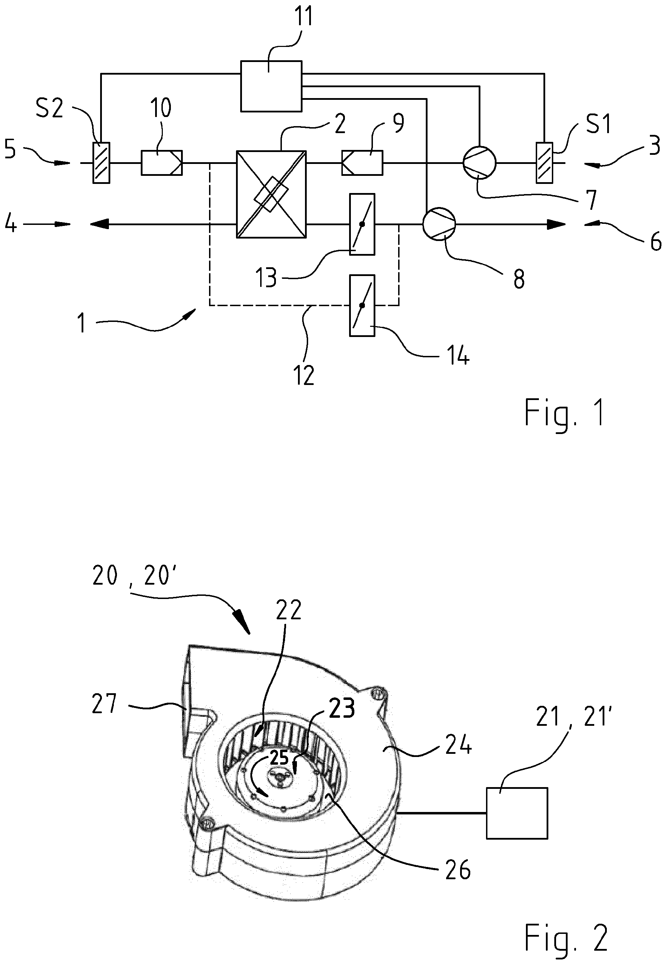

Fig. 1 zeigt schematisch eine Lüftungsvorrichtung 1, das zum Einbau in eine thermische Gebäudehülle eines von Menschen benutzten Gebäudes, also eines Büro- oder Wohngebäudes, ausgebildet ist. Die thermische Gebäudehülle ist üblicherweise eine Außenmauer. Wesentlicher Bestandteil der dezentralen Lüftungsvorrichtung 1 ist ein Wärmetauscher 2, der einen Wärmeübergang zwischen einer aus einem Innenraum abgezogenen Abluft und einer vom Gebäudeäußeren zugeführten Zuluft bewirkt. Der Wärmetauscher 2 ist dabei in einer bevorzugten Ausführungsform als Gegenstromwärmetauscher ausgebildet, wie das Schemabild der Fig. 1 zeigt.

Die Lüftungsvorrichtung 1 zieht einen Abluftstrom 3 aus einem Gebäudeinneren ab und bläst ihn als Fortluftstrom 4 nach Durchtritt durch den Wärmetauscher 2 am Gebäudeäußeren aus.

Gegenläufig dazu wird ein Frischluftstrom 5 an der Gebäudeaußenseite angesaugt und über den Wärmetauscher 2 geführt, worauf er als Zuluftstrom 6 am Gebäudeinneren austritt. Die Bezeichnungen der Ströme sind auf den Innenraum bezogen, wie dies für Lüftungsvorrichtungen üblich ist. Der Wärmetauscher 2 erwärmt den Frischluftstrom 5 durch Wärme, die er dem Abluftstrom 3 entnimmt. Zur Förderung des Abluftstroms 3 ist ein Abluftradiallüfter 7 vorgesehen. Der Zuluftstrom 6 wird von einem Zuluftradiallüfter 8 gefördert. Filter 9 und 10 filtern den Frischluftstrom 5 bzw. den Abluftstrom 3 beim Eintritt in die Lüftungsvorrichtung 1.

Die Lüftungsvorrichtung 1 wird von einer Betriebssteuereinrichtung 11 gesteuert, die über nicht näher bezeichnete Leitungen insbesondere mit dem Abluftradiallüfter 7 und dem Zuluftradiallüfter 8 verbunden ist. Die Lüftungsvorrichtung 1 verfügt in einer Ausführungsform optional über einen Überbrückungskanal 12 mit dem die Zuluft unter Umgehung des Wärmetauschers 2 geführt werden kann. Dies geschieht dann, wenn Klappen 13, 14 entsprechend gestellt sind. Auf diese Weise kann verhindert werden, dass der von außen angesaugte Frischluftstrom 5 im Wärmetauscher 2 angewärmt wird.

Im Abluftstrom 3 sowie im Frischluftstrom 5 sitzen Luftdrucksensoren S1 und S2. Sie erfassen den Luftdruck der angesaugten Luft und sind mit der Betriebssteuereinrichtung 11 verbunden.

In einer Ausführungsform der Lüftungsvorrichtung 1 ist der Abluftradiallüfter 7 als Radiallüfter 20 mit vorwärtsgekrümmten Schaufeln ausgebildet. In einer bevorzugten Ausführungsform ist der Zuluftradiallüfter 8 als gleichermaßen aufgebauter Radiallüfter 20' ausgebildet. Die Bauweise des Radiallüfters 20 und 20' wird nachfolgend anhand der Fig. 2 erläutert, wobei exemplarisch die Beschreibung anhand des Radiallüfters 20 erfolgt. Der Radiallüfter 20 hat eine Steuerplatine 21, welche mit der Betriebssteuereinrichtung 11 verbunden ist und für den entsprechenden Antrieb des Radiallüfters 20 sorgt. Der Radiallüfter umfasst ein Lüfterrad 22 mit vorwärtsgekrümmten Schaufeln, das von einem EC-Motor 23 angetrieben wird. Ein Gehäuse 24 sorgt im Zusammenhang mit dem angetriebenen Lüfterrad 22 für eine Luftförderung, sodass bei einer Drehung des Lüfterrads 22 Luft an einem Ansaugkanal 26 angesaugt und an einem Ausblaskanal 27 ausgeblasen wird.

Die Steuerplatine 21 steuert den Motor 23 so an, dass ein vorbestimmter Volumenstrom realisiert wird. Sie verwendet dazu den eingangs im allgemeinen Teil der Beschreibung bereits erwähnten Zusammenhang zwischen elektrischem Betriebsstrom des Motors 23 und Drehzahl des Lüfterrades 22, also auch des Motors 23. Die Steuerplatine 21 verwendet eine pulsweitenmodulierte Steuerung des Betriebsstroms des Motors 23, wie sie aus dem Stand der Technik bekannt ist.

Die Radiallüfter 20, 20' unterscheiden sich hinsichtlich der Steuerplatinen 21 und 21' hinsichtlich der hinterlegten Zusammenhänge ansonsten in einer Ausführungsform nicht.

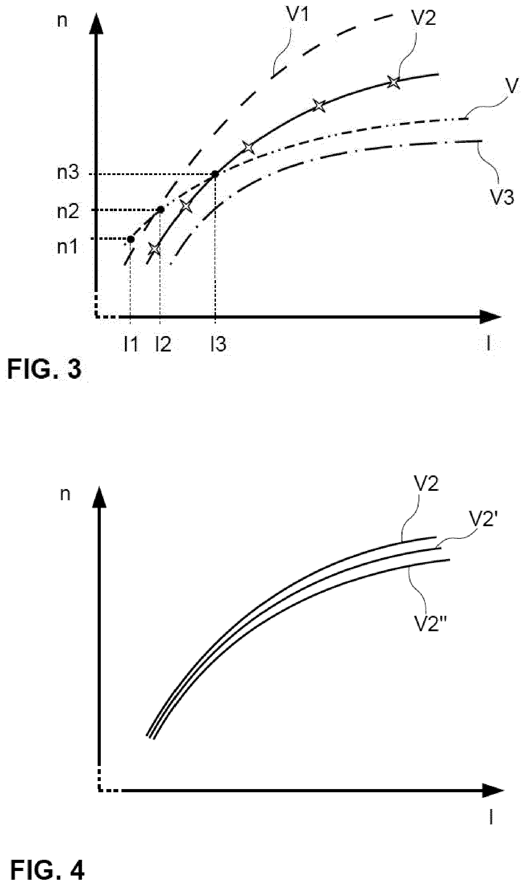

**Fig. 3** bis **Fig. 5** betreffen den Zusammenhang zwischen Drehzahl und Betriebsstrom, den die Steuerplatine 21, 21' bei der Steuerung des Radiallüfters 20, 20' einstellt. Fig. 3 und Fig. 4 zeigen ein Drehzahl-Betriebsstromdiagramm, wobei die Drehzahl n die Drehzahl des Lüfterrades 22 bzw. des Motors 23 ist und der elektrische Betriebsstrom I derjenige Strom ist, den die Steuerplatine 21, 21' zum Antrieb des Motors 23 und damit des Lüfterrades 22 vorgibt und einstellt. Fig. 3 zeigt drei Zusammenhänge V1, V2, V3 zwischen Drehzahl n und Betriebsstrom I. Jeder der Zusammenhänge gilt für einen anderen Volumenstrom, den der Radiallüfter 20, 20' fördert.

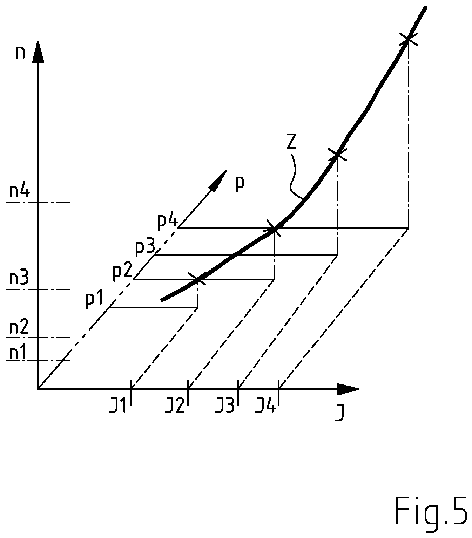

A priori möchte man meinen, dass es zum Fördern eines Luftstromes nur genau einen Wert des Betriebsstromes I geben sollte. Dies ist für Standardbedingungen, z. B für einen genau definierten Differenzdruck p, den der Radiallüfter 20 ansaug- oder ausblasseitig hat, zutreffend. Steigt der Differenzdruck p ist jedoch ein höherer Betriebsstrom I erforderlich, und es stellt sich auch eine höhere Drehzahl n ein. Der Zusammenhang zwischen Drehzahl n und Betriebsstrom I ist damit bei vollständiger Würdigung auch vom Differenzdruck p abhängig. Dies zeigt Fig. 5 in einer dreidimensionalen Auftragung eines exemplarischen Zusammenhangs Z, der die Drehzahl n, den Betriebsstrom I und den Differenzdruck p verknüpft. Bei einem Differenzdruck p1 genügt ein Betriebsstrom I1, um einen vorgegebenen Luftstrom zu fördern. Es stellt sich dann eine Drehzahl n1 des Lüfterrads 22 ein. Ist der Differenzdruck höher, beispielsweise auf einem Wert p2, ist ein größerer Betriebsstrom I2 erforderlich, und auch die Drehzahl n wächst auf einen Wert n2, um den gleichen Luftstrom zu fördern. Dies setzt sich fort. Bei einem nochmals anwachsenden Differenzdruck p auf den Wert p3 steigt sowohl der Betriebsstrom auf den Wert I3 als auch die Drehzahl auf den Wert n3. Eine nochmalige Steigerung des Differenzdrucks auf den Wert p4 benötigt einen Betriebsstrom I4 und eine entsprechend nochmals gestiegene Drehzahl n, damit derselbe Luftstrom gefordert wird. Der Zusammenhang Z gilt folglich für einen bestimmten Luftstrom. Für einen größeren oder kleineren Luftstrom verläuft der Kurve des Zusammenhangs Z steiler oder flacher. Dies zeigt Fig. 3 in zweidimensionaler Darstellung im Drehzahl-Betriebsstromdiagramm in Form von drei Zusammenhängen V1 (gestrichelt gezeichnet), V2 (durchgezogen gezeichnet) und V3 (strichpunktiert gezeichnet). Einzelne Wertepaare, die beispielhaft für den Zusammenhang V2 durch Sterne eingetragen sind, entsprechen den Paaren aus Drehzahl n und Betriebsstrom I für unterschiedliche Differenzdrücke p.

In Betrieb des Radiallüfters folgen der Betriebsstrom I und die Drehzahl n einem Verhalten V, das in Fig. 3 durch eine Zwei-Punkt-Drei-Strich-Linie eingetragen ist. Das Verhalten V kann beim Betrieb des Radiallüfters 20 von der Steuerplatine 21 sehr einfach berücksichtigt werden, indem die Steuerplatine 21 die Drehzahl oder den Betriebsstrom langsam erhöht. Immer dort, wo das Verhalten V einen der Zusammenhänge schneidet, fördert der Radiallüfter den dem jeweiligen Zusammenhang zugeordneten Luftstrom. So ist beispielsweise bei der Drehzahl n3 ein Strom 33 gemäß des Zusammenhangs V2 erreicht, wodurch der Radiallüfter 20, wenn die Steuerplatine 21 ihn mit dem Betriebsstrom I3 antreibt, genau den Luftstrom fördert, der dem Zusammenhang V2 zugeordnet ist.

Die Steuerplatine 21 geht zum Auffinden des Wertepaares n3, I3 beispielshalber wie folgt vor: Zuerst wird auf Basis des vorgegebenen Sollwertes für den Volumenstrom ein Zusammenhang ausgewählt. Im Beispiel ist es der Zusammenhang V2. Dann wird eine Drehzahl n1 eingestellt, die beispielsweise die minimale mögliche Drehzahl sein kann. Anschließend wird der dazugehörige Betriebsstrom I1 erfasst und geprüft, ob er dem Betriebsstrom I entspricht, der dem Zusammenhang V2 genügt. Dies ist im dargestellten Beispiel der Figur 3 nicht der Fall. Daraufhin erhöht die Steuerplatine 21 die Vorgabe für die Drehzahl n2 um ein voreingestelltes Inkrement. Es zeigt sich, dass auch hier der Betriebsstrom I2 noch zu gering ist. Anschließend wird die Drehzahl n3 noch mal um ein vorbestimmtes Inkrement auf den Wert n3 erhöht. Hier stellt sich nun ein Betriebsstrom I3 ein, der dem Zusammenhang V2 entspricht. Auf diese Weise fördert der Radiallüfter den gewünschten Soll-Luftstrom gemäß Zusammenhang V2. Die Prüfung, ob der Betriebsstrom, welcher sich für eine eingestellte Drehzahl n ergibt, über oder unter dem Betriebsstrom liegt, der vom Zusammenhang vorgegeben wird, ergibt automatisch die entsprechende Anweisung, ob die Drehzahl erhöht oder gesenkt werden muss. Natürlich wird man zweckmäßigerweise den Änderungsschritt für die Drehzahl reduzieren, wenn sich herausstellte, dass auf eine Erhöhung der Drehzahl eine Erniedrigung folgt. Das iterative Verfahren wird abgebrochen, wenn das gefundene Wertepaar aus Drehzahl und Betriebsstrom dem ausgewählten Zusammenhang V2 hinreichend, d. h. im Rahmen vorgegebener Fehlergrenzen nahe kommt. Dabei können die vorgegebenen Fehlergrenzen beispielsweise prozentual angegeben werden, also z.B. Abweichung der Ist-Drehzahl von der Drehzahl des Wertepaars (bzw. des Zusammenhangs) kleiner als 3 % (oder 5 %), und Abweichung des Ist-Betriebsstroms vom Betriebsstrom des Wertepaars (bzw. des Zusammenhangs) kleiner als 3 % (oder 5 %). Die genaue Abweichung hängt ab von der Anzahl (Dichte) der Wertepaare bzw. Zusammenhänge. Man kann z.B. in Vorabversuchen mit einer großen Abweichung beginnen und diese so lange reduzieren, bis man entweder für das nächstliegende oder aber für das nächstliegende oder das maximal direkt benachbarte Wertepaar mit dieser verringerten Abweichung ermitteln kann. Alternativ kann auch eine absolute Fehlergrenze vorgegeben werden, oder es kann der Abstand von allen bzw. von allen benachbarten Wertepaaren ermittelt werden, und anhand des Abstands kann das nächstliegende Wertepaar bzw. der nächstliegende Zusammenhang bestimmt werden. Wenn der nächstliegende Zusammenhang dem ausgewählten Zusammenhang (z.B. V2) entspricht, kann das gefundene Wertepaar als geeignet für den ausgewählten Zusammenhang angesehen werden.

Natürlich kann das Auffinden des Schnittpunktes zwischen V und V2 auch von der Vorgabe des Betriebsstroms ausgehen. Das oben dargelegte gilt dann analog.

Wie bereits im allgemeinen Teil der Beschreibung erläutert, kann durchaus der Schnittpunkt zwischen Verhalten V und einem Zusammenhang Z, der dem gewünschten Luftstrom entspricht, an einer Stelle liegen, an der kein Wertepaar für den entsprechenden Zusammenhang definiert ist, wenn der Zusammenhang als Wertepaartabelle hinterlegt ist. In einem solchen Fall wird dann ein Betriebsstrom I vom Steuergerät 21 eingestellt, der innerhalb gewisser Fehlergrenzen einem Wertepaar des gewünschten Zusammenhangs möglichst nahe kommt, oder die Steuerplatine 21 führt eine Interpolation zwischen passenden benachbarten Wertepaaren durch.

Der bislang beschriebene Zusammenhang der Figuren 3 und 4 liefert keinen hochkonstanten Volumenstrom. Um im Lüftungsgerät eine gewünschte Volumenkonstanz zu erreichen, modifiziert die Steuerplatine 21 den Zusammenhang V für einen gewünschten Luftvolumenstrom als Funktion mindestens eines Parameters, der die Dichte der geförderten Luft angibt. In Frage kommen hierbei der Druck der angesaugten Luft, die Temperatur der angesaugten Luft und die relative Feuchte der angesaugten Luft. Die Modifikation ist in Fig. 3 exemplarisch für den Zusammenhang V2 gezeigt. Genügt Luftdruck und/oder Temperatur und/oder relative Feuchte Normbedingungen, gilt der Zusammenhang V2. Sinkt der Luftdruck von einem Wert p0 auf einen Wert p1 oder steigt die Temperatur von einem Wert T0 auf einen Wert T1 oder sinkt die relative Feuchte von einem Wert von rF0 auf einen Wert rF1, wird der Zusammenhang V2 zu einem Zusammenhang V2' modifiziert, der bei gleichem Betriebsstrom zu niedrigeren Drehzahlen führt. Analoges gilt bei einer nochmaligen Senkung des Luftdrucks auf einen Wert p2, einer nochmaligen Erhöhung der Temperatur auf einen Wert T2 und/oder einer nochmaligen Reduzierung der Feuchte auf einen Wert rF2; dann wird der Zusammenhang V2" verwendet.

Wird Luft näherungsweise als ideales Gas betrachtet, berechnet sich die Luftdichte $\rho$ in kg/m$^3$ für trockene Luft zu:

$$\rho = (p * M) / (R * T)$$

mit

p  = Luftdruck
M  = molare Masse (kg / mol),
R  = Universelle Gaskonstante R, und
T  = Temperatur in Kelvin.

Durch Einsetzen der spezifische Gaskonstante $R_S$ für trockene Luft erhält man:

$$\rho = p / (R_S * T)$$

mit

$$R_S = 287,058 \, J / (kg * K)$$

Der atmosphärischer Luftdruck (mittlerer Luftdruck der Atmosphäre auf Meereshöhe) ist gemäß Norm $p_0$ = 101325 Pa = 1013,25 mbar.

Bei $T_0$ = 273,15 K (0 °C) (Normbendingung) ist die Luftdichte:

$$\rho_0 = 101325 / (287,05 \times 273,15) \, kg/m^3 = 1,293 \, kg/m^3.$$

$\rho_0$ = 101325 / (287,05 $\times$ 273,15) kg/m$^3$ = 1,293 kg/m$^3$.

Bei $T_{25}$ = 298,15 K (25 °C) ist die Luftdichte:

$$\rho_{25} = 101325 / (287,058 \times 298,15) \, kg/m^3 = 1,184 \, kg/m^3.$$

Mit diesen Formeln lässt sich die Luftdichte in Abhängigkeit von der Temperatur der angesaugten Luft ausrechnen, aber auch in Abhängigkeit von dem Luftdruck der angesaugten Luft,
Sofern die Lüftungsvorrichtung in Umgebungen mit sich ändernder Luftfeuchtigkeit eingesetzt wird, ist für eine gute Dichtebestimmung der Luft eine Berücksichtigung der Luftfeuchte vorteilhaft, da diese die Gaskonstante der Luft verändert. Es gilt

$$\rho = p / (R_f * T)$$

mit

$$R_f = R_l / (1 - \varphi * p_d/p * (1 - R_l/R_d)$$

wobei gilt

$R_l$ = Gaskonstante der trockenen Luft (287,058 J / (kg * K))
$R_d$ = Gaskonstante von Wasserdampf (461,523 J / (kg * K))
$\varphi$ = relative Luftfeuchtigkeit (z.B. 0,65 entsprechend 65 %),
p = Umgebungsdruck in Pascal
$p_d$ = Sättigungsdampfdruck von Wasser

Der Sättigungsdampfdruck von Wasser kann in Tabellen nachgesehen werden oder über Näherungsformeln berechnet werden.

Da in vielen Anwendungsfällen eine näherungsweise Berechnung der Luftdichte vollkommen ausreichend ist, muss nicht zwingend die genaue Formel für den Luftdruck verwendet werden, sondern es kann z.B. eine näherungsweise Berechnung durch Berücksichtigung der ersten beiden Glieder einer Taylor-Reihenentwicklung verwendet werden.

Um die Berechnung nicht unnötig kompliziert zu machen und damit die Anforderung an die Steueranordnung nicht zu hoch anzusetzen, kann eine Beschränkung auf die für den jeweiligen Anwendungsbereich wichtigsten Parameter erfolgen, also beispielsweise nur auf die Temperatur, nur auf den Luftdruck, oder nur auf den Luftdruck und die Luftfeuchtigkeit.

Die Berücksichtigung der ermittelten Luftdichte kann wie oben beschrieben beispielsweise dadurch erfolgen, dass für unterschiedliche Luftdichten unterschiedliche Zusammenhänge bereit gestellt werden, die mit dem entsprechenden Lüftertyp unter Laborbedingungen und mit einer zusätzlichen Messung des Volumenstroms ermittelt werden. Alternativ kann entsprechend der Änderung der Luftdichte eine Erhöhung bzw. Senkung der Zusammenhänge erfolgen.

Dabei verhält sich der Leistungsbedarf P des Lüfters näherungsweise proportional zur Luftdichte $\rho$, also

$$P1 / P0 = \rho1 / \rho0$$

wobei
P0 beispielsweise die Leistung bei einer Norm-Luftdichte $\rho0$ ist, und P1 die entsprechend erforderliche Leistung bei einer Luftdichte $\rho1$.

Für die Leistung P gilt

$$P = U * I$$

Hierdurch lässt sich näherungsweise die erforderliche Anpassung des Zusammenhangs V2 zu V2' bzw. V2" in Abhängigkeit von der Luftdichte $\rho$ bestimmen.
Die Steuerplatine 21 berücksichtigt auf diese Weise die Dichteänderung der Luft und gelangt somit zu einem Betrieb des Radiallüfters mit hoher Volumenkonstanz auch bei variierenden Betriebsbedingungen.

Ein Beispiel für solche Betriebsbedingungen sind der Einsatz der Lüftungsvorrichtung in größeren Höhen. Verwendet man die Lüftungsvorrichtung, deren Zusammenhänge für Meereshöhe ausgelegt wurden, würden sich aufgrund der geringeren Dichte der Luft in größeren Höhen, beispielsweise im Alpenvorland auf einer Höhe von 1.500 m, ein unerwünscht gesteigerter Betriebsstrom und eine dementsprechend unerwünscht höhere Drehzahl des Lüfterrades 22 einstellen, da gemäß den Zusammenhängen zur Förderung der selben Luftmasse ein höherer Durchsatz nötig wäre. Die dichteabhängige Einflussnahme gemäß Fig. 3 bewirkt jedoch, dass der Volumenstrom auch in größerer Höhe dem auf Meereshöhe entspricht. Analoges gilt für eine Temperaturerhöhung oder eine Absenkung der relativen Feuchte, die beide gleichermaßen die Dichte der geförderten Luft mindern.

Durch Verwendung von Zusammenhängen, die von der Luftdichte abhängen, können die Steuerplatinen 21, 21' eine sehr gute Volumenkonstanz für den Abluftstrom 3 wie den Zuluftstrom 6 erreichen. Das Betriebssteuergerät 11 leitet deshalb an die Steuerplatine 21 den vom Luftdrucksensor S1 gemessenen Wert für die vom Abluftradiallüfter 7 angesaugte Luft. Analoges gilt für den Messwert des Luftdrucks, den der Luftdrucksensor S2 für die vom Zuluftradiallüfter 8 angesaugte Luft. Die Betriebssteuereinrichtung 11 meldet diesen Wert an die Steuerplatine 21'.

In anderen Worten ausgedrückt wird entweder der Strom auf einen Sollwert geregelt und die sich dabei einstellende Drehzahl erfasst, oder umgekehrt. Wenn der aktuelle Strom und die aktuelle Drehzahl dem dem gewünschten Volumenstrom zugeordneten Zusammenhang entsprechen, wird angenommen, dass der tatsächliche Volumenstrom dem gewünschten Volumenstrom entspricht. Wenn nicht, wird der Strom oder die Drehzahl auf einen anderen Sollwert geregelt, um einen aktuellen Strom und eine aktuelle Drehzahl einzustellen, die einem dem gewünschten Volumenstrom zugeordneten Zusammenhang entsprechen.

Naturgemäß sind vielfältige Abwandlungen und Modifikationen möglich.

So kann beispielsweise durch die mindestens eine Lüfterregeleinrichtung der Betrieb des Radiallüfters hinsichtlich eines elektrischen Betriebsstroms (I) des Radiallüfters und der Drehzahl (n) des Radiallüfters geregelt werden.

**Patentansprüche**

1.   Lüftungsvorrichtung zum Luftaustausch durch eine Gebäudehülle, wobei die Lüftungsvorrichtung (1) aufweist:

- mindestens einen elektrischen Radiallüfter (20) mit vorwärtsgekrümmten Schaufeln zur Förderung eines Luftstroms (3),
- eine Betriebssteuereinrichtung (11) zum Steuern eines Betriebs der Lüftungsvorrichtung (1), die einen Sollwert für den Luftstrom (3) vorgibt,
- eine Luftmesseinrichtung (S1), welche dazu ausgebildet ist, für einen Dichteparameter mindestens einen Messwert von Luft, welche der Radiallüfter (20) fördert, bereitzustellen, wobei der mindestens eine Messwert gewählt ist aus der Gruppe bestehend aus Luftdruck, Temperatur und relativer Feuchte, und
- mindestens eine Lüfterregeleinrichtung (21), welche dazu ausgebildet ist,

-- den Betrieb des Radiallüfters (20) hinsichtlich eines elektrischen Betriebsstroms (I) des Radiallüfters (20) oder einer Drehzahl (n) des Radiallüfters (20) zu regeln,
-- mehrere, verschiedene Zusammenhänge (V1, V2, V3) von Drehzahl (n) und elektrischem Betriebsstrom (I) zu verwenden, wobei jeder der Zusammenhänge (V1, V2, V3) einem anderen Sollwert des Luftstroms (3) zugeordnet ist und von dem mindestens einen Messwert der vom Radiallüfter (20) geförderten Luft abhängt,
-- ausgehend von dem Sollwert für den Luftstrom (3) und dem mindestens einen Messwert der vom Radiallüfter (20) geförderten Luft einen der Zusammenhänge (V1, V2, V3) auszuwählen, und
-- den elektrischen Betriebsstrom (I) oder die Drehzahl (n) des Radiallüfters (20) auf einen Wert einzustellen, bei dem der elektrische Betriebsstrom (I) und die Drehzahl (n) des Radiallüfters (20) dem ausgewählten der Zusammenhänge (V1, V2, V3) genügt.

2.   Lüftungsvorrichtung nach Anspruch 1, bei welchem

- der vom elektrische Radiallüfter (20) geförderte Luftstrom (3) ein Abluftstrom ist,
- die Lüftungsvorrichtung (1) einen weiteren elektrischen Radiallüfter (20') mit vorwärtsgekrümmten Schaufeln aufweist, der zur Förderung eines weiteren Luftstromes (6) ausgebildet ist, welcher ein dem Abluftstrom gegenläufiger Zuluftstrom ist,
- die Lüfterregeleinrichtung (21') einen Betrieb des weiteren Radiallüfters (20') hinsichtlich eines elektrischen Betriebsstroms (I) des weiteren Radiallüfters (20') oder einer Drehzahl (n) des weiteren Radiallüfters (20') regelt,
- die Luftmesseinrichtung (S1, S2) dazu ausgebildet ist, auch einen Messwert von Luft bereitzustellen, welche der weitere Radiallüfter (20') fördert, und
- die Lüfterregeleinrichtung (21'), die den Betrieb des weiteren Radiallüfters (20') hinsichtlich eines elektrischen Betriebsstroms (I) des weiteren Radiallüfters (20') oder einer Drehzahl (n) des weiteren Radiallüfters (20') regelt, mehrere, verschiedene Zusammenhänge (V1, V2, V3) von Drehzahl (n) und elektrischem Betriebsstrom (I) verwendet, wobei jeder der Zusammenhänge (V1, V2, V3) einem anderen Sollwert des Luftstroms (6) zugeordnet ist und vom Messwert der vom weiteren Radiallüfter (20') angesaugten Luft abhängt, ausgehend von dem Sollwert für den Luftstrom (6) und dem Messwert von der angesaugten Luft einen der Zusammenhänge (V1, V2, V3) auswählt und den elektrischen Betriebsstrom (I) oder die Drehzahl (n) des weiteren Radiallüfters (20') auf einen Wert einstellt, bei dem der elektrische Betriebsstrom (I) und die Drehzahl (n) des weiteren Radiallüfters (20') dem ausgewählten der Zusammenhänge (V1, V2, V3) genügt.

3.   Lüftungsvorrichtung nach einem der vorherigen Ansprüche, bei welchem die Lüfterregeleinrichtung (21, 21') ausgehend von einem Startwert den elektrischen Betriebsstrom (I) oder die Drehzahl (n) erhöht, um einen Zustand, bei dem der elektrische Betriebsstrom (I) und die Drehzahl (n) des weiteren Radiallüfters (20') dem ausgewählten der Zusammenhänge (V1, V2, V3) genügen, zu ermitteln.

4.   Lüftungsvorrichtung nach einem der vorherigen Ansprüche, bei welchem die Zusammenhänge (V1, V2, V3) so vom Messwert der angesaugten Luft abhängen, dass die mit steigendem Messwert der Luft die den Drehzahlen (n) zugeordneten elektrischen Betriebsströme (I) sinken und/oder die den elektrischen Betriebsströmen (I) zugeordneten Drehzahlen steigen.

5. Lüftungsvorrichtung nach einem der vorherigen Ansprüche, bei welchem dem Radiallüfter (20, 20') ein Luftfilter (9, 10) vor- oder nachgeordnet ist und die Betriebssteuereinrichtung (11) eine Filterstandsanzeige oder -schnittstelle aufweist und aus dem eingestellten Wert des Betriebsstroms (I) und/oder der Drehzahl (n) einen Beladungsgrad des Filters (9, 10) ermittelt und an der Filterstandsanzeige anzeigt bzw. über die Filterstandsschnittstelle ausgibt.

6. Lüftungsvorrichtung nach einem der vorhergehenden Ansprüche, bei welchem die Lüfterregeleinrichtung (21) dazu ausgebildet ist,
den Betrieb des Radiallüfters (20) hinsichtlich des elektrischen Betriebsstroms (I) des Radiallüfters (20) zu regeln und die Drehzahl (n) des Radiallüfters (20) zu erfassen, oder den Betrieb des Radiallüfters (20) hinsichtlich der Drehzahl (n) des Radiallüfters (20) zu regeln, und den elektrischen Betriebsstrom (I) des Radiallüfters (20) zu erfassen.

7. Lüftungsvorrichtung nach einem der vorhergehenden Ansprüche, bei welchem die Zusammenhänge die Form von Tabellen haben, welche jeweils Wertepaare aus Drehzahl (n) und elektrischem Betriebsstroms (I) aufweisen, wobei vorzugsweise beim Einstellen des Wertes, bei dem der elektrische Betriebsstrom (I) und die Drehzahl (n) des weiteren Radiallüfters (20') dem ausgewählten der Zusammenhänge (V1, V2, V3) genügt, eine Interpolation zwischen mindestens zweien der Wertepaare ausgeführt wird.

8. Verfahren zur Luftstromregelung für eine Lüftungsvorrichtung (1) zum Luftaustausch durch eine Gebäudehülle, wobei

- mit mindestens einem elektrischen Radiallüfter (20) mit vorwärtsgekrümmten Schaufeln ein Luftstrom (3) gefördert wird,
- ein Sollwert für einen Luftstrom (3) vorgegeben wird, und
- für einen Dichteparameter mindestens ein Messwert von Luft bereitgestellt wird, welche der Radiallüfter (20) fördert, wobei der mindestens eine Messwert gewählt ist aus der Gruppe bestehend aus Luftdruck, Temperatur und relativer Feuchte,
- ein Betrieb des Radiallüfters (20) hinsichtlich eines elektrischen Betriebsstroms (I) des Radiallüfters (20) oder einer Drehzahl (n) des Radiallüfters (20) geregelt wird, wobei

-- mehrere, verschiedene Zusammenhänge (V1, V2, V3) von Drehzahl (n) und elektrischem Betriebsstrom (I) des Radiallüfters (20) verwendet werden, wobei jeder der Zusammenhänge (V1, V2, V3) einem anderen Sollwert des Luftstroms (3) zugeordnet ist und von dem mindestens einen Messwert der vom Radiallüfter (20) geförderten Luft abhängt,
-- ausgehend von dem Sollwert für den Luftstrom (3) und dem mindestens einen Messwert der geförderten Luft einer der Zusammenhänge (V1, V2, V3) ausgewählt wird, und
-- der elektrische Betriebsstrom (I) oder die Drehzahl (n) des Radiallüfters (20) auf einen Wert eingestellt wird, bei dem der elektrische Betriebsstrom (I) und die Drehzahl (n) des Radiallüfters (20) dem ausgewählten der Zusammenhänge (V1, V2, V3) genügen.

9. Verfahren nach Anspruch 8, bei welchem

- der vom elektrischen Radiallüfter (20) geförderte Luftstrom (3) ein Abluftstrom ist,
- mit einem weiteren elektrischen Radiallüfter (20') mit vorwärtsgekrümmten Schaufeln ein weiterer Luftstrom (6) gefördert wird, welcher ein dem Abluftstrom gegenläufiger Zuluftstrom ist,
- ein Messwert von Luft bereitgestellt wird, welche der weitere Radiallüfter (20') ansaugt, und
- ein Betrieb des weiteren Radiallüfters (20') hinsichtlich eines elektrischen Betriebsstroms (I) des weiteren Radiallüfters (20') oder einer Drehzahl (n) des weiteren Radiallüfters (20') geregelt wird, wobei

-- mehrere, verschiedene Zusammenhänge (V1, V2, V3) von Drehzahl (n) und elektrischem Betriebsstrom (I) des weiteren Radiallüfters (20') verwendet werden, wobei jeder der Zusammenhänge (V1, V2, V3) einem anderen Sollwert des Luftstroms (3) zugeordnet ist und vom Messwert der vom weiteren Radiallüfter (20') angesaugten Luft abhängt,
-- ausgehend von dem Sollwert für den Luftstrom (6) und dem Messwert der angesaugten Luft einer der Zusammenhänge (V1, V2, V3) ausgewählt wird, und
-- der elektrische Betriebsstrom (I) oder die Drehzahl (n) des weiteren Radiallüfters (20') auf einen Wert eingestellt wird, bei dem der elektrische Betriebsstrom (I) und die Drehzahl (n) des weiteren Radiallüfters (20') dem ausgewählten der Zusammenhänge (V1, V2, V3) genügt.

10. Verfahren nach einem der Ansprüche 8 oder 9, bei welchem die Zusammenhänge (V1, V2, V3) so vom Messwert der angesaugten Luft abhängen, dass die mit steigendem Wert des Messwerts die den Drehzahlen (n) zugeordneten elektrischen Betriebsströme (I) sinken und/oder die den elektrischen Betriebsströmen (I) zugeordneten Drehzahlen (n) steigen.

11. Verfahren nach einem der Ansprüche 8 bis 10, bei welchem der Wert, bei dem der elektrische Betriebsstrom (I) und die Drehzahl (n) des weiteren Radiallüfters (20') dem ausgewählten der Zusammenhänge (V1, V2, V3) genügen, iterativ ermittelt wird, indem ausgehend von einem Startwert den elektrischen Betriebsstrom (I) oder die Drehzahl (n) solange erhöht wird, bis der Wert gefunden ist.

12. Verfahren nach einem der Ansprüche 8 bis 11, bei welchem dem Radiallüfter (20, 20') ein Luftfilter (9, 10) vor- oder nachgeordnet wird und aus dem eingestellten Wert des Betriebsstroms (I) oder der gemessenen Drehzahl (n) einen Beladungsgrad des Filters (9, 10) ermittelt und über eine Filterstandsanzeige angezeigt oder über eine Filterstandsschnittstelle ausgegeben wird.

13. Verfahren nach einem der Ansprüche 8 bis 12, bei welchem die Zusammenhänge die Form von Tabellen haben, welche jeweils Wertepaare aus Drehzahl (n) und elektrischem Betriebsstrom (I) aufweisen, wobei vorzugsweise beim Einstellen des Wertes, bei dem der elektrische Betriebsstrom (I) und die Drehzahl (n) des weiteren Radiallüfters (20') dem ausgewählten der Zusammenhänge (V1, V2, V3) genügt, eine Interpolation zwischen mindestens zweien der Wertepaare ausgeführt wird.

14. Lüftungsvorrichtung nach Anspruch 2 oder Verfahren nach Anspruch 7, bei welchem die Zusammenhänge (V1, V2, V3) für den Radiallüfter (20) und den weiteren Radiallüfter (20') unterschiedlich sind.

**Claims**

1. A ventilation device for air exchange through a building envelope, wherein the ventilation device (1) comprises:

   - at least one electric radial fan (20) having forward-curved blades for conveying an air flow (3),
   - an operation control means (11) for controlling operation of the ventilation device (1), which specifies a setpoint value for the air flow (3),
   - an air measuring means (S1), which is designed to provide at least one measurement value of air which the radial fan (20) conveys for a density parameter, wherein the at least one measurement value is selected from the group consisting of air pressure, temperature and relative humidity, and
   - at least one fan regulating means (21), which is designed
   - to regulate the operation of the radial fan (20) with respect to an electric operating current (I) of the radial fan (20) or a rotational speed (n) of the radial fan (20),
   - to use a plurality of different relationships (V1, V2, V3) of rotational speed (n) and electric operating current (I), wherein each of the relationships (V1, V2, V3) is associated with a different setpoint value of the air flow (3) and depends on the at least one measurement value of the air conveyed by the radial fan (20),
   - to select one of the relationships (V1, V2, V3) on the basis of the setpoint value for the air flow (3) and the at least one measurement value of the air conveyed by the radial fan (20), and
   - to set the electric operating current (I) or the rotational speed (n) of the radial fan (20) to a value at which the electric operating current (I) and the rotational speed (n) of the radial fan (20) satisfy the selected one of the relationships (V1, V2, V3).

2. The ventilation device according to claim 1, wherein

   - the air flow (3) conveyed by the electric radial fan (20) is an exhaust air flow,
   - the ventilation device (1) comprises a further electric radial fan (20') having forward-curved blades, which is designed to convey a further air flow (6), which is a supply air flow counter to the exhaust air flow,
   - the fan regulating means (21') regulates operation of the radial fan (20') with respect to an electric operating current (I) of the further radial fan (20') or a rotational speed (n) of the further radial fan (20'),
   - the air measuring means (S1, S2) is designed to also provide a measurement value of air which the further

EP 2 846 106 B1

radial fan (20') conveys, and
- the fan regulating means (21'), which regulates the operation of the further radial fan (20') with respect to an electric operating current (I) of the further radial fan (20') or a rotational speed (n) of the further radial fan (20'), uses a plurality of different relationships (V1, V2, V3) of rotational speed (n) and electric operating current (I), wherein each of the relationships (V1, V2, V3) is associated with a different setpoint value of the air flow (6) and depends on the measurement value of the air drawn in by the further radial fan (20'), selects one of the relationships (V1, V2, V3) on the basis of the setpoint value for the air flow (6) and the measurement value of the air drawn in, and sets the electric operating current (I) or the rotational speed (n) of the further radial fan (20') to a value at which the electric operating current (I) and the rotational speed (n) of the further radial fan (20') satisfy the selected one of the relationships (V1, V2, V3).

3. The ventilation device according to any one of the preceding claims, wherein the fan regulating means (21, 21'), proceeding from an initial value, increases the electric operating current (I) or the rotational speed (n) in order to determine a state in which the electric operating current (I) and the rotational speed (n) of the further radial fan (20') satisfy the selected one of the relationships (V1, V2, V3).

4. The ventilation device according to any one of the preceding claims, wherein the relationships (V1, V2, V3) depend on the measurement value of the drawn-in air such that the electric operating currents (I) associated with the rotational speeds (n) decrease as the measurement value of the air increases and/or the rotational speeds associated with the electric operating currents (I) increase.

5. The ventilation device according to any one of the preceding claims, wherein an air filter (9, 10) is arranged upstream or downstream of the radial fan (20, 20') and the operation control means (11) has a filter status indicator or interface and determines a degree of loading of the filter (9, 10) from the set value of the operating current (I) and/or the rotational speed (n) and displays same on the filter status indicator or outputs same via the filter status interface.

6. The ventilation device according to any one of the preceding claims, wherein the fan regulating means (21) is designed to regulate the operation of the radial fan (20) with respect to the electric operating current (I) of the radial fan (20) and to detect the rotational speed (n) of the radial fan (20), or to regulate the operation of the radial fan (20) with respect to the rotational speed (n) of the radial fan (20), and to detect the electric operating current (I) of the radial fan (20).

7. The ventilation device according to any one of the preceding claims, wherein the relationships have the form of tables which each have pairs of values consisting of rotational speed (n) and electric operating current (I), wherein preferably when the value is set at which the electric operating current (I) and the rotational speed (n) of the further radial fan (20') satisfy the selected one of the relationships (V1, V2, V3), an interpolation is performed between at least two of the pairs of values.

8. A method for regulating air flow for a ventilation device (1) for air exchange through a building envelope, wherein

- an air flow (3) is conveyed by at least one electric radial fan (20) having forward-curved blades,
- a setpoint value for an air flow (3) is specified, and
- for a density parameter at least one measurement value of air is provided, which the radial fan (20) conveys, wherein the at least one measurement value is selected from the group consisting of air pressure, temperature and relative humidity,
- operation of the radial fan (20) is regulated with respect to an electric operating current (I) of the radial fan (20) or a rotational speed (n) of the radial fan (20), wherein
- a plurality of different relationships (V1, V2, V3) of rotational speed (n) and electric operating current (I) of the radial fan (20) is used, wherein each of the relationships (V1, V2, V3) is associated with a different setpoint value of the air flow (3) and depends on the one measurement value of the air conveyed by the radial fan (20),
- one of the relationships (V1, V2, V3) is selected on the basis of the setpoint value for the air flow (3) and the at least one measurement value of the conveyed air, and
- the electric operating current (I) or the rotational speed (n) of the radial fan (20) are set to a value at which the electric operating current (I) and the rotational speed (n) of the radial fan (20) satisfy the selected one of the relationships (V1, V2, V3).

9. The method according to claim 8, wherein

- the air flow (3) conveyed by the electric radial fan (20) is an exhaust air flow,
- a further air flow (6), which is a supply air flow counter to the exhaust air flow, is conveyed by a further electric radial fan (20') having forward-curved blades,
- a measurement value of air which the further radial fan (20') draws in is provided, and
- operation of the further radial fan (20') is regulated with respect to an electric operating current (I) of the further radial fan (20') or a rotational speed (n) of the further radial fan (20'), wherein
- a plurality of different relationships (V1, V2, V3) of rotational speed (n) and electric operating current (I) of the further radial fan (20') is used, wherein each of the relationships (V1, V2, V3) is associated with a different setpoint value of the air flow (3) and depends on the measurement value of the air drawn in by the further radial fan (20'),
- one of the relationships (V1, V2, V3) is selected on the basis of the setpoint value for the air flow (6) and the measurement value of the air drawn in, and
- the electric operating current (I) or the rotational speed (n) of the further radial fan (20') is set to a value at which the electric operating current (I) and the rotational speed (n) of the further radial fan (20') satisfy the selected one of the relationships (V1, V2, V3).

10. The method according to any one of claims 8 or 9, wherein the relationships (V1, V2, V3) depend on the measurement value of the drawn-in air such that the electric operating currents (I) associated with the rotational speeds (n) decrease as the value of the measurement value increases and/or the rotational speeds (n) associated with the electric operating currents (I) increase.

11. The method according to any one of claims 8 to 10, wherein the value at which the electric operating current (I) and the rotational speed (n) of the further radial fan (20') satisfy the selected one of the relationships (V1, V2, V3) is determined iteratively in that, proceeding from an initial value, the electric operating current (I) or the rotational speed (n) is increased until the value is found.

12. The method according to any one of claims 8 to 11, wherein an air filter (9, 10) is arranged upstream or downstream of the radial fan (20, 20') and a degree of loading of the filter (9, 10) is determined from the set value of the operating current (I) or the measured rotational speed (n) and is displayed via a filter status indicator or is output via a filter status interface.

13. The method according to any one of claims 8 to 12, wherein the relationships have the form of tables which each have pairs of values consisting of rotational speed (n) and electric operating current (I), wherein preferably when the value is set at which the electric operating current (I) and the rotational speed (n) of the further radial fan (20') satisfy the selected one of the relationships (V1, V2, V3), an interpolation is performed between at least two of the pairs of values.

14. The ventilation device according to claim 2 or the method according to claim 7, wherein the relationships (V1, V2, V3) are different for the radial fan (20) and the further radial fan (20').

**Revendications**

1. Dispositif d'aération pour l'échange d'air à travers une enveloppe de bâtiment, dans lequel le dispositif d'aération (1) présente :

    - au moins un ventilateur radial électrique (20) avec des aubes incurvées vers l'avant pour l'acheminement d'un débit d'air (3),
    - un dispositif de commande de fonctionnement (11) pour la commande d'un fonctionnement du dispositif d'aération (1), qui prédéfinit une valeur de consigne pour le débit d'air (3),
    - un dispositif de mesure d'air (S1), lequel est réalisé pour mettre à disposition d'un paramètre de densité au moins une valeur de mesure d'air, que le ventilateur radial (20) achemine, dans lequel l'au moins une valeur de mesure est sélectionnée dans le groupe composé de pression d'air, température et humidité relative, et
    - au moins un dispositif de réglage de ventilateur (21), lequel est réalisé
    - pour régler le fonctionnement du ventilateur radial (20) en termes de courant de fonctionnement électrique (I) du ventilateur radial (20) ou de vitesse de rotation (n) du ventilateur radial (20),
    - pour utiliser plusieurs relations (V1, V2, V3) différentes de vitesse de rotation (n) et de courant de fonctionnement électrique (I), dans lequel chacune des relations (V1, V2, V3) est associée à une autre valeur de consigne du débit d'air (3) et dépend de l'au moins une valeur de mesure de l'air acheminé par le ventilateur radial (20),
- pour sélectionner une des relations (V1, V2, V3) à partir de la valeur de consigne pour le débit d'air (3) et de l'au moins une valeur de mesure de l'air acheminé par le ventilateur radial (20), et
- pour régler le courant de fonctionnement électrique (I) ou la vitesse de rotation (n) du ventilateur radial (20) sur une valeur à laquelle le courant de fonctionnement électrique (I) et la vitesse de rotation (n) du ventilateur radial (20) satisfont à la relation sélectionnée des relations (V1, V2, V3).

2. Dispositif d'aération selon la revendication 1, dans lequel

- le débit d'air (3) acheminé par le ventilateur radial électrique (20) est un débit d'air évacué,
- le dispositif d'aération (1) présente un autre ventilateur radial électrique (20') avec des aubes incurvées vers l'avant, qui est réalisé pour l'acheminement d'un autre débit d'air (6), lequel est un débit d'air amené inverse au débit d'air évacué,
- le dispositif de réglage de ventilateur (21') règle un fonctionnement de l'autre ventilateur radial (20') en termes de courant de fonctionnement électrique (I) de l'autre ventilateur radial (20') ou de vitesse de rotation (n) de l'autre ventilateur radial (20'),
- le dispositif de mesure d'air (S1, S2) est réalisé pour également mettre à disposition une valeur de mesure d'air que l'autre ventilateur radial (20') achemine, et
- le dispositif de réglage de ventilateur (21'), qui règle le fonctionnement de l'autre ventilateur radial (20') en termes de courant de fonctionnement électrique (I) de l'autre ventilateur radial (20') ou de vitesse de rotation (n) de l'autre ventilateur radial (20'), utilise plusieurs relations (V1, V2, V3) différentes de vitesse de rotation (n) et de courant de fonctionnement électrique (I), dans lequel chacune des relations (V1, V2, V3) est associée à une autre valeur de consigne du débit d'air (6) et dépend de la valeur de mesure de l'air aspiré par l'autre ventilateur radial (20'), sélectionne une des relations (V1, V2, V3) à partir de la valeur de consigne pour le débit d'air (6) et de la valeur de mesure de l'air aspiré, et règle le courant de fonctionnement électrique (I) ou la vitesse de rotation (n) de l'autre ventilateur radial (20') sur une valeur à laquelle le courant de fonctionnement électrique (I) et la vitesse de rotation (n) de l'autre ventilateur radial (20') satisfont à la relation sélectionnée des relations (V1, V2, V3).

3. Dispositif d'aération selon l'une quelconque des revendications précédentes, dans lequel le dispositif de réglage de ventilateur (21, 21') augmente à partir d'une valeur de départ le courant de fonctionnement électrique (I) ou la vitesse de rotation (n) afin de déterminer un état dans lequel le courant de fonctionnement électrique (I) et la vitesse de rotation (n) de l'autre ventilateur radial (20') satisfont à la relation sélectionnée des relations (V1, V2, V3).

4. Dispositif d'aération selon l'une quelconque des revendications précédentes, dans lequel les relations (V1, V2, V3) dépendent de la valeur de mesure de l'air aspiré de sorte que les courants de fonctionnement électriques (I) associés aux vitesses de rotation (n) diminuent avec l'augmentation de la valeur de mesure de l'air et/ou les vitesses de rotation associées aux courants de fonctionnement électriques (I) augmentent.

5. Dispositif d'aération selon l'une quelconque des revendications précédentes, dans lequel un filtre d'air (9, 10) est monté en amont ou en aval du ventilateur radial (20, 20') et le dispositif de commande de fonctionnement (11) présente un affichage ou une interface de niveau de filtrage et détermine à partir de la valeur réglée du courant de fonctionnement (I) et/ou de la vitesse de rotation (n) un degré de charge du filtre (9, 10) et l'affiche au niveau de l'affichage de niveau de filtre ou l'émet par le biais de l'interface de niveau de filtre.

6. Dispositif d'aération selon l'une quelconque des revendications précédentes, dans lequel le dispositif de réglage de ventilateur (21) est réalisé pour régler le fonctionnement du ventilateur radial (20) en termes de courant de fonctionnement électrique (I) du ventilateur radial (20) et pour détecter la vitesse de rotation (n) du ventilateur radial (20), ou pour régler le fonctionnement du ventilateur radial (20) en termes de vitesse de rotation (n) du ventilateur radial (20), et pour détecter la courant de fonctionnement électrique (I) du ventilateur radial (20).

7. Dispositif d'aération selon l'une quelconque des revendications précédentes, dans lequel les relations prennent la forme de tableaux, lesquels présentent respectivement des paires de valeurs formées d'une vitesse de rotation (n) et d'un courant de fonctionnement électrique (I), dans lequel de préférence lors du réglage de la valeur, à laquelle le courant de fonctionnement électrique (I) et la vitesse de rotation (n) de l'autre ventilateur radial (20') satisfont à la relation sélectionnée des relations (V1, V2, V3), une interpolation entre au moins deux des paires de valeurs est réalisée.

8. Procédé de réglage de débit d'air pour un dispositif d'aération (1) pour l'échange d'air à travers une enveloppe de bâtiment, dans lequel

- avec au moins un ventilateur radial électrique (20) avec des aubes incurvées vers l'avant, un débit d'air (3) est acheminé,
- une valeur de consigne pour un débit d'air (3) est prédéfinie, et
- au moins une valeur de mesure d'air, que le ventilateur radial (20) achemine, est mise à disposition d'un paramètre de densité, dans lequel l'au moins une valeur de mesure est sélectionnée dans le groupe composé de pression d'air, température et humidité relative,
- un fonctionnement du ventilateur radial (20) en termes de courant de fonctionnement électrique (I) du ventilateur radial (20) ou de vitesse de rotation (n) du ventilateur radial (20) est réglé, dans lequel
- plusieurs relations (V1, V2, V3) différentes de vitesse de rotation (n) et de courant de fonctionnement électrique (I) du ventilateur radial (20) sont utilisées, dans lequel chacune des relations (V1, V2, V3) est associée à une autre valeur de consigne du débit d'air (3) et dépend de l'au moins une valeur de mesure de l'air acheminé par le ventilateur radial (20),
- une des relations (V1, V2, V3) est sélectionnée à partir de la valeur de consigne pour le débit d'air (3) et de l'au moins une valeur de mesure de l'air acheminé, et
- le courant de fonctionnement électrique (I) ou la vitesse de rotation (n) du ventilateur radial (20) est réglé sur une valeur à laquelle le courant de fonctionnement électrique (I) et la vitesse de rotation (n) du ventilateur radial (20) satisfont à la relation sélectionnée des relations (V1, V2, V3).

9. Procédé selon la revendication 8, dans lequel

- le débit d'air (3) acheminé par le ventilateur radial électrique (20) est un débit d'air évacué,
- un autre débit d'air (6), lequel est un débit d'air amené inverse au débit d'air évacué, est acheminé avec un autre ventilateur radial électrique (20') avec des aubes incurvées vers l'avant,
- une valeur de mesure d'air, que l'autre ventilateur radial (20') aspire, est mise à disposition et
- un fonctionnement de l'autre ventilateur radial (20') en termes de courant de fonctionnement électrique (I) de l'autre ventilateur radial (20') ou de vitesse de rotation (n) de l'autre ventilateur radial (20') est réglé, dans lequel
- plusieurs relations (V1, V2, V3) différentes de vitesse de rotation (n) et de courant de fonctionnement électrique (I) de l'autre ventilateur radial (20') sont utilisées, dans lequel chacune des relations (V1, V2, V3) est associée à une autre valeur de consigne du débit d'air (3) et dépend de la valeur de mesure de l'air aspiré par l'autre ventilateur radial (20'),
- une des relations (V1, V2, V3) est sélectionnée à partir de la valeur de consigne pour le débit d'air (6) et de la valeur de mesure de l'air aspiré, et
- le courant de fonctionnement électrique (I) ou la vitesse de rotation (n) de l'autre ventilateur radial (20') est réglé sur une valeur à laquelle le courant de fonctionnement électrique (I) et la vitesse de rotation (n) de l'autre ventilateur radial (20') satisfont à la relation sélectionnée des relations (V1, V2, V3).

10. Procédé selon l'une quelconque des revendications 8 ou 9, dans lequel les relations (V1, V2, V3) dépendent de la valeur de mesure de l'air aspiré de sorte que les courants de fonctionnement électriques (I) associés aux vitesses de rotation (n) diminuent avec l'augmentation de la valeur de mesure et/ou les vitesses de rotation (n) associées aux courants de fonctionnement électriques (I) augmentent.

11. Procédé selon l'une quelconque des revendications 8 à 10, dans lequel la valeur, à laquelle le courant de fonctionnement électrique (I) et la vitesse de rotation (n) de l'autre ventilateur radial (20') satisfont à la relation sélectionnée des relations (V1, V2, V3), est déterminée de manière itérative par le fait qu'en partant d'une valeur de départ, le courant de fonctionnement électrique (I) ou la vitesse de rotation (n) est augmenté jusqu'à ce que la valeur soit trouvée.

12. Procédé selon l'une quelconque des revendications 8 à 11, dans lequel un filtre d'air (9, 10) est monté en amont ou en aval du ventilateur radial (20, 20') et un degré de charge du filtre (9, 10) est déterminé à partir de la valeur réglée du courant de fonctionnement (I) ou de la vitesse de rotation (n) et affiché par le biais d'un affichage de niveau de filtre ou émis par le biais d'une interface de niveau de filtre.

13. Procédé selon l'une quelconque des revendications 8 à 12, dans lequel les relations prennent la forme de tableaux, lesquels présentent respectivement des paires de valeurs formées d'une vitesse de rotation (n) et d'un courant de fonctionnement électrique (I), dans lequel de préférence lors du réglage de la valeur, à laquelle le courant de fonctionnement électrique (I) et la vitesse de rotation (n) de l'autre ventilateur radial (20') satisfont à la relation sélectionnée des relations (V1, V2, V3), une interpolation entre au moins deux des paires de valeurs est réalisée.

**14.** Dispositif d'aération selon la revendication 2 ou procédé selon la revendication 7, dans lequel les relations (V1, V2, V3) sont différentes pour le ventilateur radial (20) et l'autre ventilateur radial (20').

Fig. 1

Fig. 2

FIG. 3

FIG. 4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1039139 A1
- DE 102011002734 A1
- DE 202009006872 U1
- DE 10141125 A1
- DE 102007017682 A1